Europäisches Patentamt

European Patent Office

Office européen des brevets

(11) Publication number: **0 383 733**
**A1**

# EUROPEAN PATENT APPLICATION

(21) Application number: 90830054.4

(22) Date of filing: **13.02.90**

(51) Int. Cl.5: **F02M 21/02, F02M 13/08**

(30) Priority: **14.02.89 IT 933789**

(43) Date of publication of application:
**22.08.90 Bulletin 90/34**

(84) Designated Contracting States:
**ES FR GR NL**

(71) Applicant: **BIGAS S.D.F. DI BIAGIOTTI
ALFREDO & C**
**Via Pratese N.121**
**I-50145 Firenze(IT)**

(72) Inventor: **Biagiotti, Alfredo**
**Via di Padule No. 71**
**I-50019 Sesto Fiorentino, Firenze(IT)**

(74) Representative: **Mannucci, Gianfranco,
Dott.-Ing.**
**Ufficio Tecnico Ing. A. Mannucci Via della
Scala 4**
**I-50123 Firenze(IT)**

(54) **Apparatus for regulating the air and gas flow to an internal combustion engine.**

(57) The apparatus is provided, within the conduit (1) for the intake of air and gaseous fuel, with a restrictor member (3) supported by a pivot pin (5); the pin carries further means (7) for the adjustment of the flow section of the duct (9) for the supply of the gas to the engine, which means (7) rotate about the same axis of said restrictor member (3).

FIG.1

# APPARATUS FOR REGULATING THE AIR AND GAS FLOW TO AN INTERNAL COMBUSTION ENGINE

The invention relates to an apparatus for the controlled reduction of the flowrate of combustion air and gaseous fuel to an internal combustion engine which can be supplied with gas and gasoline (petrol) in a promiscuous (alternative) manner, comprising a restriction member able to take up a fixed position of maximum opening during the petrol-operated running of the engine to which said apparatus is associated, and a position varying according to the vacuum degree generated by the engine during the gas-operated running of the engine to which said apparatus is associated.

Known apparatuses of this type allow a correct operation of the engine when using a promiscuous (alternative) supply of gas or gasoline. The apparatus is mounted on the air-intake conduit upstream of the air filter. During the petrol-operated running, said restrictor member is fully open, and the apparatus has no influence on the engine operation. Vice-versa, when the engine is supplied with gas (methane, L.P.G. or the like), the restrictor member takes up one of the many possible positions between a position of maximum opening and a position of minimum opening (defined by a stop element), said two positions corresponding to the maximum and minimum revolution-per-minute running of the engine. The position of the restrictor member is determined by the vacuum generated by the engine in the combustion air-intake conduit.

More or less complex kinematic systems connect the above mentioned restrictor member to shutter means of the gas supplying conduit, so that the cross-section of said conduit is made to vary according to the vacuum generated by the engine within the air intake conduit, thereby maintaining an optimal air/gas ratio all the time, with a consequent consumption reduction. The known apparatuses of this type are particularly complex and difficult to calibrate, owing to the complexity of the kinematic connecting mechanisms between the restrictor member of the combustion air conduit and the shutter means of the gaseous fuel supplying duct. The calibration - which is carried out by adjusting the position of minimum opening of said restrictor member in the air conduit, the minimum cross-section of the gaseous fuel supplying duct, and the elastic force to be exerted on said restrictor member by suitable counteracting elastic means - is made critical by the complexity of the apparatuses presently known and is, on the other hand, particularly delicate and crucial for an economical running of the engine. As the same apparatus can be mounted on engines which are very different both in capacity and power, the calibration is an indispensable operation to allow the same apparatus to meet the characteristics of the engine on which it is mounted each time.

The object of the invention is to provide an apparatus of the above mentioned type, which is particularly simple and reliable and easily adjustable.

The apparatus according to the invention is characterized, in practice, in that the restrictor member is a member rotatively supported by a pivot pin, which carries further means for adjusting the through section of the duct for the supply of gas to the engine, said further means rotating about the same axis of said restrictor member. When the engine is supplied with gas, the vacuum generated by the engine within the air intake conduit causes the restrictor member and directly, through the supporting pin of the latter, also the means for the adjustment of the flow section of the gas supply duct, to open more or less.

Further advantageous features of the invention are set forth in the attached claims and will result evident from the reading of the following description.

The invention will be better understood by following the description and the attached drawing, which shows a practical non limiting embodiment of the same invention. In the drawing:

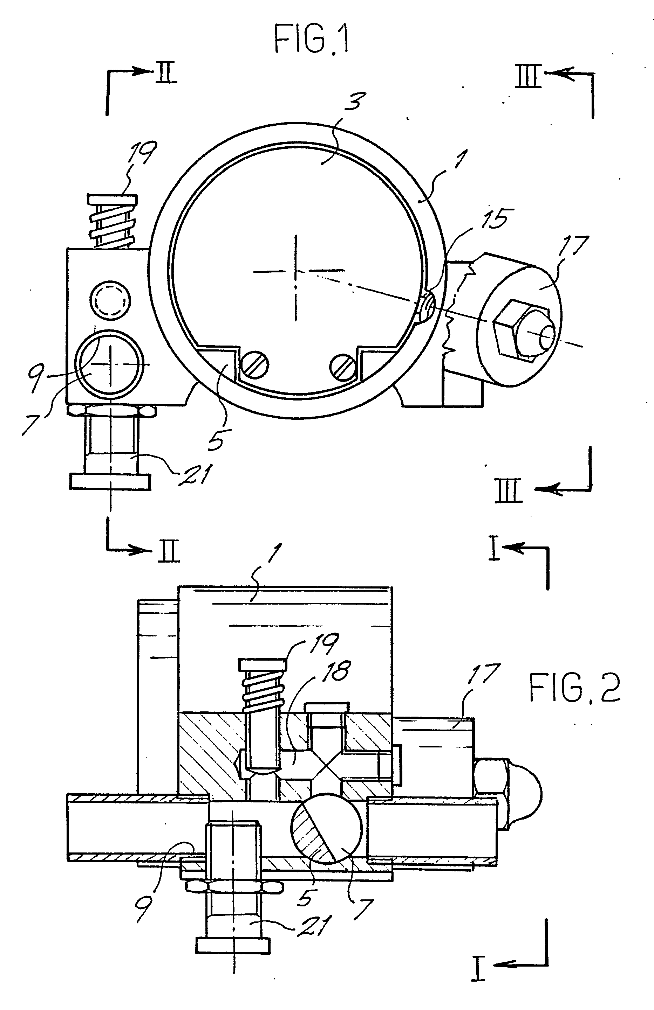

Fig.1 shows a front view from line I-I of Fig.2 of the apparatus according to the invention;

Fig.2 shows a section on line II-II of Fig. 1; and

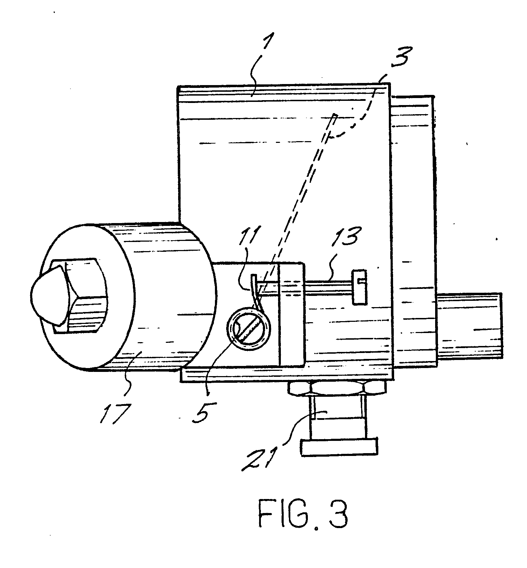

Fig.3 shows a side view from line III-III of Fig. 1.

According to what is illustrated in the attached drawing, the apparatus according to the invention comprises a hollow cylindrical body 1 inside which a restrictor member is disposed having the form of a throttle valve 3 borne by an off-center pin or small shaft 3, which valve is able to increase or reduce the internal cross-section of the hollow cylindrical body 1, through which the combustion air sucked by the engine is made to flow. The body 1 may be fitted at the inlet of the sleeve of the air-filtering group or within the hoses of the injection engines.

The pin 5 has a rotating valve 7 at one end thereof, capable of varying the internal cross-section of a duct 9 through which the gaseous fuel coming from a suitable tank is made to flow via a pressure reducer. The valve 7 may be formed by a flat of the pin or small shaft 5.

Associated to the pin 5 are elastic return means formed, in the example shown, with a spiral spring 11 which urges the valve 7 and the restrictor member 3 in the closed position. The torque exerted by the spiral spring 11 on the pin 5 can be adjusted by a set screw 13 to which one of the end of the same spring is anchored or made to rest, the other end being anchored to the pin 5. An adjustable stop element for the throttle valve 3 is provided within the hollow body 1; said stop element, in the example of the drawing, is formed by the stem 15 of a solenoid valve 17 utilized for the purposes indicated below. The position of the adjustable stop element determines the minimum opening of the passage formed in the cylindrical hollow body 1. In the illustrated example, the stop is adjustable through a set means located on the solenoid valve 17. It is also possible to provide an adjustable stop located in another suitable position on the cylindrical hollow body 1.

When running the engine by gas supply, the throttle valve 3 is urged by the force of spring 11 and the force resulting from the difference of air pressure on the same valve 3 due to the engine-operated suction. When the engine runs at the minimum revolution-per-minute value, the valve 3 rests against the stem 15 and the valve 7, being rigidly connected to valve 3, shuts completely the duct 9. Under these conditions, the flowrate of the air suched by the engine is minimal - as set by the above mentioned stop element - and the gas flowrate necessary to keep the engine at the minimum revolution-per-minute condition is made to pass through an offtake 18 which bypasses the valve 7 in the duct 9. Within said offtake there is provided a screw 19 for the fine adjustment of the minimum flowrate of the gas. When the engine r.p.m. value increases, the vacuum generated in the combustion air-intake conduit increases as well, because of the presence of throttle valve 3. This vacuum causes a gradual opening of said valve 3 and thus also of valve 7 in the gas supply duct 9. The flowrate of the air/gas mixture to the engine is thereby increased up to a maximum value determined by the position of maximum opening of throttle valve 3.

The maximum gas flowrate can be adjusted, according to the characteristics of the engine on which the apparatus is mounted, by acting on a screw 21 inserted in the duct 9 by means of which screw the maximum gas flow section is varied.

When the engine is run by petrol supply, the solenoid valve 17 is activated to keep the throttle valve 3 in its opening position, while the gas supply is blocked upstream of the illustrated apparatus, for example in correspondence of the pressure reducer disposed between the valve 7 and the gas tank. In this condition, the apparatus according to the invention has no effect over the engine supply.

The apparatus according to the invention is of simple design and can be very easily calibrated to fit all the various types of engines, the calibration being performed by acting on screws 13, 19 and 21.

## Claims

1. Apparatus for the controlled reduction of the flowrate of combustion air and gaseous fuel to an internal combustion engine which can be supplied with gas and petrol (gasoline) alternatively, comprising a restrictor member able to take up a fixed position of maximum opening during the petrol-operated running of the same engine, and a position varying according to the vacuum degree generated by the engine during the gas-operated running of said engine, characterized in that said restrictor member (3) is a rotating member supported by a pivot pin (5), which carries further means (7) for adjusting the flow section of the duct for the supply of the gas to the engine, said further means (7) rotating about the same axis of said restrictor member.

2. Apparatus according to claim 1, characterized in that, under a minimum revolution-per-minute running of the engine, said means (7) for adjusting the flow section of the gas supply duct, close completely the gas flow section within which they are inserted, and that an offtake (18) is provided which bypasses said means (7), through which the gas under said minimum r.p.m. condition is made to flow.

3. Apparatus according to claim 2, characterized in that within said offtake (18) a screw-operated section regulator (19) is provided having needle profile or similar, for the adjustment of the gas at minimum r.p.m. running.

4. Apparatus according to the preceding claims, characterized by comprising a screw regulator (13) or equivalent, to adjust the load on the spring upon acting against the opening of the restrictor member (3).

5. Apparatus according to the preceding claims, characterized in that the restrictor member is a throttle valve with off-center axis, on the pin of which the counteracting spring (11) is made to act; one of the ends of said spring (11) resting against or engaging with the screw regulator (13) which varies the deformation thereof.

6. Apparatus according to the preceding claims, characterized in that said further means (7) for adjusting the gas flow section are formed by a flat on the articulation pin of the throttle valve (3).

7. Apparatus according to the preceding claims, characterized in that the offtake (18) leads downstream of said further means (7) for the adjustment of the section of the gas supply duct (9), and upstream of a regulator (21) of said duct (9).

# FIG.1

# FIG.2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | CH-A-579216 (BONVIN)<br>* column 1, lines 7 - 19 *<br>* column 1, lines 33 - 53 *<br>* column 2, lines 15 - 23 * | 1 | F02M21/02<br>F02M13/08 |
| Y | GB-A-634330 (AMERICAN BOSCH)<br>* page 1, line 83 - page 2, line 39; figures 1, 2, 6 * | 1 | |
| A | NL-A-7706500 (AGAS NEDERLAND)<br>* page 3, line 24 - page 4, line 35; figures 2, 3, 7 * | 2, 3, 7 | |
| A | US-A-1932370 (HEINISH)<br>* page 1, lines 1 - 4; figures 2-4 *<br>* page 1, line 83 - page 2, line 44 * | 1, 5 | |
| A | US-A-2957759 (JETTINGHOFF)<br>* column 1, lines 15 - 16; figures 1-5 *<br>* column 1, line 46 - column 2, line 2 * | 3, 6, 7 | |
| A | US-A-4096838 (TANAKA)<br>* column 2, line 48 - column 3, line 9; figures 1a, 1b * | 5, 6 | **TECHNICAL FIELDS SEARCHED (Int. Cl.5 )**<br><br>F02M |
| A | GB-A-2057056 (BOSCH)<br>* page 2, lines 6 - 35 * | 4, 5 | |
| A | FR-E-51235 (GEORGES) | | |
| A | FR-A-652764 (GRIFFON) | | |

The present search report has been drawn up for all claims

| Place of search | Date of completion of the search | Examiner |
|---|---|---|
| THE HAGUE | 25 MAY 1990 | JORIS J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)